# EUROPEAN PATENT APPLICATION

(11) **EP 2 660 680 A1**
(43) Date of publication of application: **06.11.2013**
(21) Application number: 12305497.5
(22) Date of filing: 03.05.2012
(51) Int. Cl.: G06F 3/01, G06F 3/048, G06F 1/16, H04W 4/20

(54) **System and method for enabling collaborative gesture-based sharing of ressources between devices**

(71) Applicant: Alcatel Lucent, 75007 Paris (FR)
(72) Inventor: Turkiewicz, Pierre, 91620 NOZAY (FR); Kostadinov, Dimitre, 91620 NOZAY (FR); Rebierre, Nicolas, 91620 NOZAY (FR)
(74) Representative: Louiset, Raphael

(57) **Abstract**

A method for content sharing between a first user terminal (1) and at least a second user terminal (2), comprising the following steps:
a) identifying a first gesture involving the first user terminal (1) ;
b) identifying a content (3), comprised within the first user terminal (1), intended to be shared ;
c) sending, to the at least second user terminal (2), metadata of the content (3) and metadata of the identified first gesture;
d) identifying a second gesture involving the at least second user terminal (2) ;
e) determining if the first gesture and the second gesture relate to a predefined interaction gesture scenario aiming at content sharing;
f) triggering the content (3) sharing.

## Description

### FIELD OF THE INVENTION

The present invention relates to a method and a system for digital contents sharing between user terminals.

### BACKGROUND OF THE INVENTION

As used herein, the term "user terminal" is meant broadly and not restrictively, to include any electronic device which may interact through user-interfaces to transmit/receive data to/from another electronic device and/or a communications network. As non limitative examples of such user terminals, one can mention a smartphone; tablet PC, MP3 player, Personal Digital Assistant (PDA), laptop and the like.

Unquestionably, such user terminals, particularly handheld ones, are now increasingly common, because they are expected to provide a plurality of applications/services such as Internet browsing, phone-calling, messaging, photo-taking, localization, games, and content sharing. The "how-to-use" of these applications/services is generally inherited from earlier systems providing similar services (such as desktop computer, or wired telephone). However, the implementation of many of these services, even if it is apprehensible by users, is certainly inappropriate and inadequate for mobile devices.

In the following, content sharing service is taken as an illustrative example of the above problem. A "content" is intended to mean, here, any content/resource/information in a digital format, including but not limited to music, videos, photos, movies, ring tones, eBooks, contact details, Electronic Business Card, document, reminder, to-do list, notification, mobile applications, message, GPS location, URL.

In fact, in order to share content (a picture for example) with a peer, a user is generally constrained to:
- open the content on his/her terminal with an appropriate application (example: gallery application);
- request the sharing of the content with an interaction that varies from one application to another (for example: a 'share' menu option)
- among the many sharing services available on the device, pick one that all recipients also support (for example: email, Facebook®);
- select the recipients (examples: contacts chooser, Google circles®).

Each recipient will later:
- receive a message on his own terminal, in a way that is specific to the chosen sharing service(for instance, a notification for an incoming email);
- extract the content from the message (example: "save attachment as" function) before consumption.

Accordingly, for sharing content with a peer, the user experience is often complex: both the senders and the recipients need to perform a sequence of actions. Further, quite often a shared third party service provider needs to be involved.

Slightly less constraining known approach for content sharing are as follow:
- choosing a sharing service on the device that the recipients also support (example: start the Facebook® application)
- with an interaction specific to the sharing service, selecting the content to be shared (example: choose the pictures to share with the gallery);
- with an interaction specific to the sharing service, requesting the sharing of content with the chosen recipients.

From the recipient side, steps cited above are unchanged.

Accordingly, existing solutions remain of excessive complexity because they require many interactions from each participant: selection of the content, selection of the sharing service, and selection of recipients. Another problem arises in the prior art with regards to the quality of human communications through electronic devices. In fact, during known content sharing methods, users interact with their respective personal devices as if they were on remote locations, without any consideration of the quality of human communication and interaction. In other words, content sharing according to known solutions is performed in almost pure human-machine interactions without any consideration of user-friendly and human-centric.

It happens that the selection step of recipients for the sharing is simplified, as it is proposed by Bump@ application (bu.mp). In fact the Bump@ application lets two users shake their mobile phone together. Based on the location of users and other information from the devices' sensors, the Bump@ service establishes a peering between users within which information assets can be shared.

Nonetheless, Bump@ solution remains partial as it requires that each user terminal is connected to the Internet. Such drawback prevents information assets sharing where this is insufficient radio coverage, or when users choose to disable data (for cost reasons when traveling abroad for example). Yet another drawback of this solution is that the chosen interaction (i.e. shake devices simultaneously) between users is not intuitively associated with the sharing.

One object of the present invention is to make sharing as simple as a natural interaction gestures.

Another object of the present invention is to make sharing of information assets between mobile devices easier, funnier, and more intuitive, thereby enhancing the human communication between sharing users (typically, body language and emotional display).

Another object of the present invention is to find "natural" and easy-to-use user interface for content sharing among mobile user equipments.

### SUMMARY

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for content sharing between a first user terminal and at least a second user terminal, comprising the following steps:
- identifying a first gesture involving the first user terminal;
- identifying a content, comprised within the first user terminal, intended to be shared;
- sending, to the at least second user terminal, metadata of the content and metadata of the identified first gesture;
- identifying a second gesture involving the at least second user terminal;
- determining if the first gesture and the second gesture relate to a predefined interaction gesture scenario aiming at content sharing;
- triggering the content sharing.

Various embodiments relate to systems for content sharing between a first user terminal and at least a second user terminal, comprising
- means for identifying a first gesture involving the first user terminal;
- means for identifying a content, comprised within the first user terminal, intended to be shared ;
- means for sending, to the at least second user terminal, metadata of the content and metadata of the identified first gesture;
- means for identifying a gesture involving the at least second user terminal;
- means for determining if the first gesture and the second gesture relate to a predefined interaction gesture scenario aiming at content sharing;
- means for triggering the content sharing.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The above and other objects and advantages of various embodiments will become apparent from the detailed description of preferred embodiments, considered in conjunction with the accompanying drawing, in which
- Fig.1 is a schematic diagram illustrating the context of content sharing;
- Fig.2 is a schematic diagram illustrating components of one embodiment;
- Fig. 3 is a schematic diagram illustrating steps of a content sharing according to one embodiment.

### DESCRIPTION OF PREFERRED EMBODIMENTS

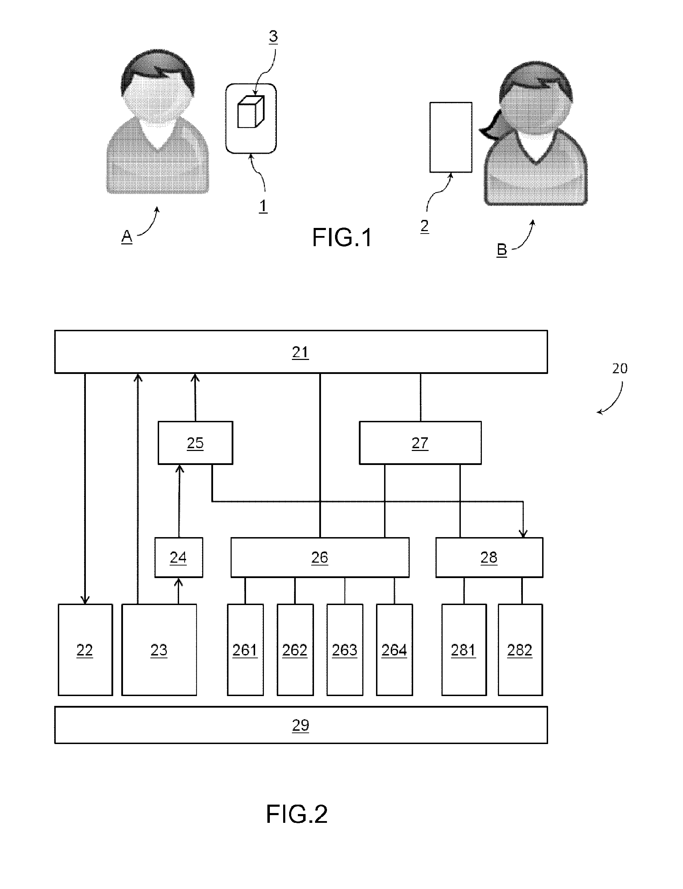

With reference to figure **1****,** a first user **A** provided with a user terminal **1** is willing to share a content **3,** held on his/her user terminal **1,** with a second user **B** provided with a user terminal **2.**

The act of sharing is to be understood, here, broadly to include sending/transferring/communicating content **3** (with or without leaving a copy of this content **3** in its original location) from one user terminal **1** to one or more other user terminals **2.**

To that end, each of the user terminals **1-2** comprises an intuitive gesture-based sharing system **20** (figure 2) enabling content sharing on the basis of natural interaction gesture of users **A** and/or **B.**

A natural interaction gesture is considered, here, as a gesture involving real-life artifacts and having a generally accepted meaning in a given context. As non exhaustive examples of such interaction gestures, one can mention
- pouring, by a first person (sender), water from a bottle into a glass of a second person (receiver), wherein water (a content) is transferred (shared) from the bottle to the glass;
- throwing (share), by a first person (sender), an apple/ball/key (content) to a second person (receiver) willing to catch it;
- giving (share) for a while, by a first person (sender), an object (content) to a second person (receiver), then get back it;
- picking up an object (content) from one's bag and filing it (share) in the bag of the interlocutor (receiver);
- knocking marbles (content) from a first person (sender) container toward a second person container (receiver).

An interaction gesture may be identified on the basis of a combination of
- a sampling of sensors values on user terminals **1-2;**
- an optional gesture filter (set of applicable gestures/scenario patterns with parameters for example);
- optional information about the proximity between user terminals **1-2;**
- optional sets of capabilities of user terminals **1-2** (supported communication channels, touch screen, accelerometers for example).

The gesture-based sharing system **20,** embedded on the platform **29** of the user terminal **1,** is configured to detect/track and to identify, with appropriated sensors **23,** interaction gestures involving the user terminal **1,** in order to control collaborative workflows on the basis thereof. In fact, when the gesture-based sharing system **20** recognizes/determines an interaction gesture, it, subsequently, organizes/triggers the sharing of the content **3** between user terminals **1-2** that are involved in the detected interaction gesture.

Sensors **23** are configured to capture user interaction events involving the user terminal **1,** such as touches on the sensitive screen, bring the user terminal **1** at a given speed/acceleration to a given point, maintaining the user terminal 1 in a given orientation/position/height, a speech/gesture intended for the user terminal **1.** Examples of such sensors **23** are accelerometer, GPS (position, latitude, longitude, and height), gyroscope (pitch, roll, azimuth for example), microphone, camera, touch & multi-touch screen.

Sensors **23** are configured to communicate with the local gesture detection component **24** which is responsible for detecting fragments of local gestures based on inputs from sensors **23** (such as, the user is shaking his user terminal, a finger pick up against the screen of the user terminal, the user terminal is held in an oblique position and in a given orientation, the phone is quickly brought forward with a sudden stop). A collaborative gesture detection component **25** is programmed for
- sharing local gestures fragments detected by the local gesture detection component **24** of each participating user terminal **1-2** (i.e. participants) ; and for
- determining from the received fragments (fragments received from the local gesture detection component **24** and those shared from neighboring user terminals **2)** an interaction gesture aiming at content sharing such as

○ "a pinch-in gesture on a icon" (received from the local gesture detection component **23),** and "a pinch-out gesture against the screen of user terminal **2"** (these associated gestures are supposed to relate to an interaction gesture scenario aiming at content sharing) ;
○ "a file is selected", "the user terminal **1** is held in an oblique position and oriented to the ground at one meter height" (gesture fragments received from the local gesture detection component **23),** "a folder is selected on user terminal **2",** "the user terminal **2** is held in an approximately horizontal plane at eighty centimeter height", "the user terminals **1** and **2** are less than forty centimeter from each other" (gestures involving user terminal **2).** These associated gestures are supposed to relate to an interaction gesture scenario aiming at content sharing, in a similar way to pouring water from a bottle into a glass.

Moreover, a gesture may include the explicit selection of the content to be shared (example: touch on the icon), or the selection may be implicit for that gesture (example: last photo sequence).

It is to be noted that some gestures may be reserved for the control of the gesture-based sharing system **20.** For example, when detecting such gestures, the collaborative gesture detection component **25** can update the user preferences (for example, add the gesture of a given participant to a white-list or to a privileged user group).

Detected user events by sensors **23** as well as derived gesture by the collaborative gesture detection component **25** are handled by a workspace **21** so as to control
- the process of content sharing, between users **1-2,** through a content sharing module **27;** and
- the feedbacks provided to users regarding the progress/state of the sharing, via output and feedback means **22** (such as a display, audio output, haptic device for example). Output and feedback means **22** are configured for displaying information on the user terminal screen, or for generating an audio output, or any other feedback (such as vibrations).

The workspace **21** is also configured to enable users to organize the access to key content with shortcut icons. Accordingly, the workspace **21** may, further, comprise, among others, a content management user interface to take into account user preferences and configuration parameters (sensors **23** configuration, black-list of user terminals for example).

The content sharing module **27** is in charge of the sharing of a content **3** from a user **A** (a sender) to one or several users **B** (receivers). The content sharing module **27** determines the appropriate sharing method, such as copy of the content **3** between user terminals **1-2,** transmit a pointer to the content **3** (which may be retrieved from another source), or order a third party to deliver to the user terminal **2** the content requested to be shared.

The content sharing module **27** relies on the user terminal **1** communications interface **28** for communicating with the other user terminals **2** involved in the sharing.

Advantageously, the communications interface **28** is further configured to control/take care of the authorization (digital rights management), and of content adaptation/translation (such as changing technical formats/quality level, media re-encoding with different parameters or technology that better suit recipients' capabilities), as needed.

The communications interface **28** provides an abstraction layer on top of the various communication channels **281-282** available between two user terminals **1-2.** Communications channels **281-282** may comprise
- IP network interfaces **281** for conveying data over general purpose IP networks to which the user terminal **1** connects with Wi-Fi or cellular data protocols (such as 3G, 4G);
- short-range communications interfaces **282** for conveying data over short-range communication channels (such as Bluetooth or NFC).
The communications interface **28** is in charge of establishing communication channels with other mobiles participating in the sharing, further called "participants". The selection of participants may be made on the basis of proximity (as detected with sensors **23** (location), or using information from short-range communication interfaces **282** such as Bluetooth or NFC) as well as user preferences (such as white-list, black-list, user groups).

Accordingly, the sharing may take place for instance with a direct transfer of the content **3** over a short range communication network (e.g. Bluetooth, Wi-Fi, ad-hoc for example), or a public wireless data network (**3**G, **4**G). Alternatively, the sharing may take place with the transfer of information allowing the recipient (user terminal 2) to obtain the resource from a third party service provider, or with the transfer of information allowing the recipient to order the copy of the content **3** from one third party provider to another.

The content sharing module **27,** further, relies on a content manager **26** which is configured to provide an abstraction layer for the various classes of resources **261-264** such as: contacts **261,** files **262,** applications **263,** or shortcut to external resources **264.**

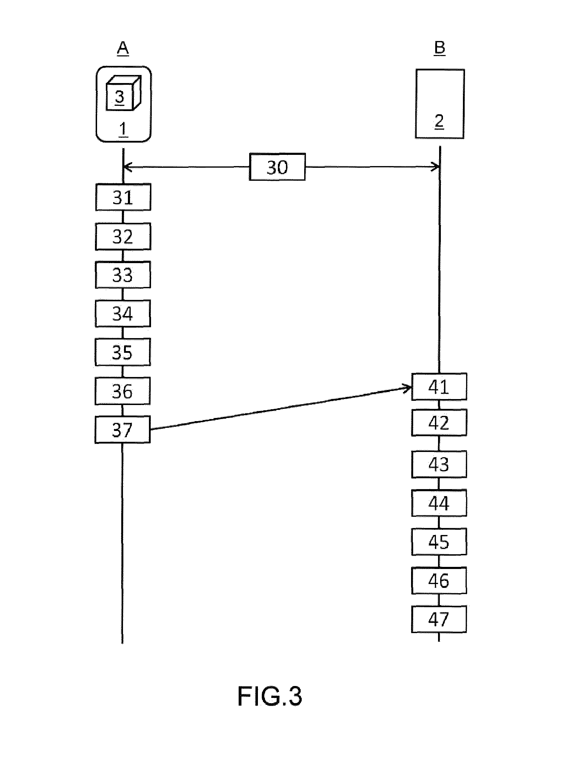

As an illustrative implementation of the above described gesture-based sharing system **20** and method, consider, with reference to figure 3, the case of a user **A** willing to share a mobile application **3** with a user **B,** both users **A-B** being located within the range of Bluetooth coverage and having established (step **30** in figure 3) a trusted communication channel linking their respective user terminals **1-2.** Accordingly, the user **A**
- performs (step **31** in figure 3) a **2**-finger pick gesture (pinch in) against the screen **23** of its user terminal **1** over the application 3 to be shared with the user **B** provided with user terminal **2;**
- the local gesture detection component **24** of user terminal **1** identifies (step **32** in figure 3) a pinch-in gesture from the data of sensors **23** (multi-touch screen);
- the collaborative gesture detection component **25** identifies (step **33** in figure 3) the local gesture as an intent to select a local content **3,** to possibly share it with a neighboring user terminal;
- the workspace **21** identifies (step **34** in figure 3) the content **3** targeted by the local gesture as a mobile application **3;**
- the workspace **21** updates (step **35** in figure 3) the display to show that the mobile application **3** picked by the **2** fingers-gesture has been picked ;
- the content sharing module **27** prepares (step **36** in figure 3) metadata for the selected content, to be transferred to the neighboring user terminal **2;**
- the communications interface **28** sends (step **37** in figure 3) metadata relative to the content (name, reference, type, source, size for example) and metadata relative to the local gesture to the neighboring user terminal **2** over the already established Bluetooth communication channel.

On the receiver side (i.e. user terminal **2),**
- the communications interface **28** of the user terminal **2** receives (step **41** in figure 3) the remote content and gesture metadata from the sender (i.e. user terminal **1);**
- the content sharing module **27** of the user terminal **2** handle (step **42** in figure 3) the received content metadata into;
- The user **A,** or **B** performs (step **43** in figure 3) a **2**-finger drop gesture (pinch out) against the screen of the user terminal **2;**
- the local gesture detection component **23** (i.e. that of the user terminal **2)** identifies (step **44** in figure 3) a pinch-out gesture from the sensors' data;
- with reference to predefined interaction gesture scenarios aiming at content sharing which are known by the gesture-based sharing system **20** (for example, stored within a local database), the collaborative gesture detection component **25** determines/recognizes (step **45** in figure 3) the local gesture as related/associated to the previously remote gesture (in other words, the local gesture matches with the remote gesture), and derive a request to handle a content **3** shared by the user terminal **1 ;**
- triggered by the workspace component, the content sharing module **27** of the user terminal **2** retrieves (step **46** in figure 3) from the sender (through its communications interface **28)** additional data associated to shared content **3** by the user terminal **1;**
- the workspace component updates (step **47** in figure 3) the user terminal **2** display (output and feedback means **22)** to show the icon of the shared content at the location where the **2**-fingers pinch-out local gesture occurred.

Consequently, the content **3** (a mobile application in the above example) is shared from user terminal **1** to user terminal **2** through pick-and-drop. A notification message may be notified to user **A** and/or **B,** via output and feedback means **22,** informing him/her about the success/failure of the sharing.

Alternatively, the sharing interactions between user terminals may be performed according to any of the followings interaction gesture scenarios (in form of couples of gestures involving sender and recipients):
- sharing a content from one device to a neighboring device through drag-and-drop, using
   ○ a point-and-slide finger gesture against the user terminal screen of the sender; and
   ○ a slide-and-raise finger gesture against the user terminal screen of the receiver ;
- sharing of an application from one user terminal to several neighboring user terminals, using a
   ○ pouring gesture with the sender's user terminal; and
   ○ a give-me gesture with the receiver user terminal (palm extended forward upwards while holding the user terminal oriented facing up, and opening and closing fingers or moving hand forward-backward).

Further, a gesture may specify the location on recipients user terminal wherein a shortcut to the content will be created (on the "home screen" for example);
- establishment of a trusted communication channel between 2 user terminals, using a waving gesture while holding each user terminal;
- release of a trusted communication channel between 2 user terminals, using a waving gesture while holding each user terminal.

Representation of contents (typically icons) may be transmitted in anticipation to potential recipients so it is possible to render animations on the recipients' devices during the execution of a gesture.

Advantageously, the above described method and system reduce the number of interactions required to share a digital content between mobile devices and make it more intuitive, pleasant and user-friendly.

## Claims

1. A method for content sharing between a first user terminal **(1)** and at least a second user terminal **(2),** said method comprising the following steps:
a) identifying a first gesture involving the first user terminal **(1) ;**
b) identifying a content **(3),** comprised within the first user terminal **(1),** intended to be shared ;
c) sending, to the at least second user terminal **(2),** metadata of the content **(3)** and metadata of the identified first gesture;
d) identifying a second gesture involving the at least second user terminal **(2) ;**
e) determining if the first gesture and the second gesture relate to a predefined interaction gesture scenario aiming at content sharing;
f) triggering the content **(3)** sharing.

2. The method of claim 1, wherein the identification of a first gesture involving the first user terminal **(1)** includes a sampling step of sensor values comprised within the first user terminal **(1).**

3. The method of claims 1 or 2, further comprising a controlling step for authorizing the sharing.

4. The method of any of the preceding claims, further comprising an adaptation step of the content **(3)** to be shared.

5. The method of any of the preceding claims, wherein the triggering step include ordering a third party to deliver the content to the at least second user terminal **(2).**

6. The method of any of the preceding claims, wherein the first gesture involving the first user terminal **(1)** is a pinch-in gesture, and the second gesture involving the at least second user terminal **(2)** is a pinch-out gesture.

7. The method of any of the preceding claims, wherein the metadata of the content and the metadata of the identified first gesture are sent over an established communication channel linking the first user terminal **(1)** to the second user terminal **(2).**

8. The method of claim 7, wherein the communication channel is a short-range communication channel.

9. A system for content sharing between a first user terminal **(1)** and at least a second user terminal **(2),** said system comprising
a) means for identifying a first gesture involving the first user terminal **(1);**
b) means for identifying a content **(3),** comprised within the first user terminal **(1),** intended to be shared ;
c) means for sending, to the at least second user terminal **(2),** metadata of the content **(3)** and metadata of the identified first gesture;
d) means for identifying a second gesture involving the at least second user terminal **(2);**
e) means for determining if the first gesture and the second gesture relate to a predefined interaction gesture scenario aiming at content sharing;
f) means for triggering the content **(3)** sharing.

10. The system of claim 9, wherein the means for identifying a first gesture involving the first user terminal **(1)** include at least a sensor **(23)** configured to capture user interaction events involving the user terminal **(1).**

11. The system of claim 10, wherein the means for identifying a first gesture involving the first user terminal **(1),** further, include a local gesture detection component **(24)** configured to detect fragments of local gestures based on inputs from the at least sensor **(23).**

12. The system of claims 10 or 11, wherein the means for identifying a first gesture involving the first user terminal (1), further, include a collaborative gesture detection component **(5)** configured to determine from gesture fragments an interaction gesture aiming at content sharing.

13. The system of any of claims 9 to 12, wherein the sending means include a short-range communications interface **(282).**

14. The system of any of claims 9 to 13, wherein the sending means further include an IP network interface **(281).**

15. A computer program including instructions stored on a memory of a dedicated system for content sharing between a first user terminal **(1)** and at least a second user terminal **(2)** wherein said computer program is adapted to perform the method as claimed in any of claims 1 to 8.
